Europäisches Patentamt

**European Patent Office**

Office européen des brevets

(19)

(11) Veröffentlichungsnummer : **0 182 741**
**B1**

(12)         EUROPÄISCHE PATENTSCHRIFT

(45) Veröffentlichungstag der Patentschrift :
13.04.88

(51) Int. Cl.⁴ : **F 16 B 13/10**

(21) Anmeldenummer : 85810496.1

(22) Anmeldetag : 30.10.85

(54) Spreizdübel.

(30) Priorität : 20.11.84 DE 3442384

(43) Veröffentlichungstag der Anmeldung :
28.05.86 Patentblatt 86/22

(45) Bekanntmachung des Hinweises auf die Patenterteilung : 13.04.88 Patentblatt 88/15

(84) Benannte Vertragsstaaten :
CH DE FR GB LI

(56) Entgegenhaltungen :
EP-A- 0 040 300
CH-A-   596 461
DE-B- 1 625 332
DE-C- 2 637 350
DE-C- 2 729 828

(73) Patentinhaber : **HILTI Aktiengesellschaft**
**FL-9494 Schaan (LI)**

(72) Erfinder : **Herb, Armin**
**Lärchenstrasse 9**
**D-8123 Peissenberg (DE)**

(74) Vertreter : **Wildi, Roland**
**Hilti Aktiengesellschaft Patentabteilung**
**FL-9494 Schaan (LI)**

## Beschreibung

Die Erfindung betrifft einen Spreizdübel zur Verankerung in Bohrlöchern von Bauteilen, mit einem Dübelkörper und einem oder mehreren keilförmigen Spreizelementen, wobei in dem der Setzrichtung entgegengesetzten Bereich des Dübelkörpers Lastangriffsmittel und im setzrichtungsseitigen Bereich des Dübelkörpers keilförmige Ausnehmungen für die Spreizelemente vorgesehen sind, wobei die Ausnehmungen einen in Setzrichtung an der Umfangskontur des Dübelkörpers auslaufenden Grund aufweisen, und die Spreizelemente mittels eines beim Einführen des Dübels in die Bohrlöcher durchtrennbaren Steges mit dem Dübelkörper verbunden sind.

Bei einem bekannten Spreizdübel (DE-A-2 637 350) ist der Dübelkörper stangenförmig ausgebildet und weist ein keilförmiges Spreizelement auf. Das keilförmige Spreizelement ist in einer keilförmigen Ausnehmung des Dübelkörpers versenkt angeordnet und über einen durchtrennbaren Steg am Grund der Ausnehmung mit dem Dübelkörper verbunden. In einem zwischen dem Grund der Ausnehmung und dem Spreizelement gebildeten Spalt ist ein als trapezförmige Platte ausgebildetes Trennelement eingesetzt, das die Umfangskontur des Dübelkörpers überragt.

Zum Setzen wird dieser bekannte Spreizdübel in ein Bohrloch eingetrieben, wobei sich das Trennelement aufgrund des Ueberragens der Umfangskontur des Dübelkörpers unter Anlage an der Wandung des Bohrloches gegen den Steg hin verschiebt und diesen durchtrennt. Hat der Spreizdübel ausreichende Tiefe im Bohrloch erreicht, so wird der Dübelkörper durch Lastangriff entgegen der Setzrichtung gezogen, wodurch das keilförmige Spreizelement eine Verkeilung im Bohrloch hervorruft.

Als nachteilig erweist sich bei diesem Spreizdübel das Erfordernis eines Trennelementes zum Durchtrennen des Steges, was nebst Montageaufwand das Problem einer lagerichtigen und lagesicheren Anordnung des Trennelementes mit sich bringt. Ferner erhöht das überstehende Trennelement den Eintreibwiderstand des Spreizdübels erheblich.

Der Erfindung liegt die Aufgabe zugrunde, einen sich durch einfache Setzbarkeit und Nachspreizverhalten auszeichnenden Spreizdübel zu schaffen, der einen einfachen Aufbau aufweist, keine Montageprobleme bietet und keinen nennenswerten Eintreibwiderstand hervorruft.

Erfindungsgemäss wird die Aufgabe dadurch gelöst, dass die Spreizelemente vom Steg in die Umfangskontur des Dübelkörpers überragender Position gehalten werden und der Steg zwischen den setzrichtungsseitigen Enden von Dübelkörper und Spreizelementen angeordnet ist, und dass die radial grösste Tiefe der Ausnehmungen geringer als das grösste Radialmass der Spreizelemente ist.

Dank der die Umfangskontur des Dübelkörpers überragenden Anordnung der Spreizelemente laufen diese am Beginn des Eintreibvorganges an der Mündung des Bohrloches auf, so dass die auf den Dübelkörper eingeleitete Eintreibkraft ein Durchtrennen des Steges bewirkt. Durch weiteres Einführen des Dübelkörpers gelangen die Ausnehmungen mit zunehmender Tiefe derselben in Höhe der Spreizelemente, die somit in die Ausnehmungen eintauchen und alsdann vom Dübelkörper in Einführrichtung mitgenommen werden. Die in die Ausnehmungen eingetauchten Spreizelemente setzen dem Eintreiben keinen nennenswerten Widerstand entgegen. Anschliessendes Belasten des Dübelkörpers entgegen der Eintreibrichtung bewirkt eine Relativverschiebung des Dübelkörpers zu den Spreizelementen, so dass es zur Verkeilung im Bohrloch kommt.

Das Anordnen des Steges zwischen den setzrichtungsseitigen Enden von Dübelkörper und Spreizelementen erleichtert das Einführen des Spreizdübels in das Bohrloch, indem die Stege ein setzrichtungsseitiges Wegstehen der Spreizelemente vom Dübelkörper unterbinden. Zudem kann der Steg biegesteif ausgebildet sein, so dass sich auch Spreizelemente eignen, die ohne radiale Abstützung am Dübelkörper mit für den Durchtrennungsvorgang ausreichender Kraft vom Steg in überragender Position gehalten werden. So ist es möglich, den Spreizdübel materialsparend und mit vergleichsweise reduzierten Bearbeitungskosten aus Blech einteilig zu fertigen. Es erübrigen sich aber auch Montagekosten für den Zusammenbau von getrennten Dübelteilen, wie sie bei bekannten Spreizdübeln vorhanden sind.

Dem Belasten des Dübelkörpers dienen Lastangriffsmittel, zweckmässig in Form eines Aussengewindes im der Setzrichtung entgegengesetzten Bereich des Dübelkörpers. Damit auch in dem das Aussengewinde tragenden Bereich durch das Aussengewinde keine Querschnittsschwächung auftritt, ist der mit Vorteil weitgehend rohrförmige Dübelkörper in diesem Bereich teilweise nach innen gefaltet. Dadurch werden längs zur Dübelachse orientierte Verstärkungsrippen geschaffen.

Vorzugsweise erstreckt sich der an der Umfangskontur des Dübelkörpers auslaufende Grund der Ausnehmungen bis zum setzrichtungsseitigen Ende des Dübelkörpers. Die Spreizkörper können so, bevor eine Durchtrennung des Steges eintritt, in den Auslauf der Ausnehmungen eintauchen, wobei der Steg als Schwenkpunkt dient. Erst darauf tritt aufgrund des nach wie vor gegebenen Ueberragens der Spreizelemente, wie voran beschrieben, das Durchtrennen des Steges ein und der Dübelkörper wird unter Mitnahme der Spreizelemente tiefer in das Bohrloch eingeführt. Dieserart sind die Spreizelemente während des gesamten Setzvorganges durch die Ausnehmungen exakt geführt.

Als herstellungstechnisch besonders vorteilhaft erweist sich die Ausbildung des Steges als Biegezone. Diese Ausbildung des Steges eignet sich im besonderen auch als Schwenkpunkt für die Spreizelemente, wobei die Biegung sich etwa über 180° erstreckt.

Eine über den Umfang des Spreizdübels gleichmässige Verteilung der Verankerungskräfte und damit hohe Verankerungswerte lassen sich erreichen, indem nach einer bevorzugten Ausführungsform über den Umfang des Dübelkörpers gleichmässig verteilt drei Ausnehmungen und Spreizelemente vorgesehen sind.

Die Erfindung wird nachstehend anhand einer Zeichnung, die ein Ausführungsbeispiel wiedergibt, näher erläutert. Es zeigen :

Fig. 1 einen Spreizdübel in Ausgangsstellung, halb Schnitt, halb Ansicht ;

Fig. 2 einen Schnitt durch den Spreizdübel nach Fig. 1 gemäss Schnittverlauf II-II.

Der insgesamt mit 1 bezeichnete Spreizdübel besteht im wesentlichen aus einem insgesamt mit 2 bezeichneten Dübelkörper und insgesamt mit 3 bezeichneten keilförmigen Spreizelementen, die über einen setzrichtungsseitigen Steg 4 mit dem Dübelkörper 2 einstückig verbunden sind. Der Spreizdübel 1 ist insgesamt als Stanzbiegeteil aus Blech geformt.

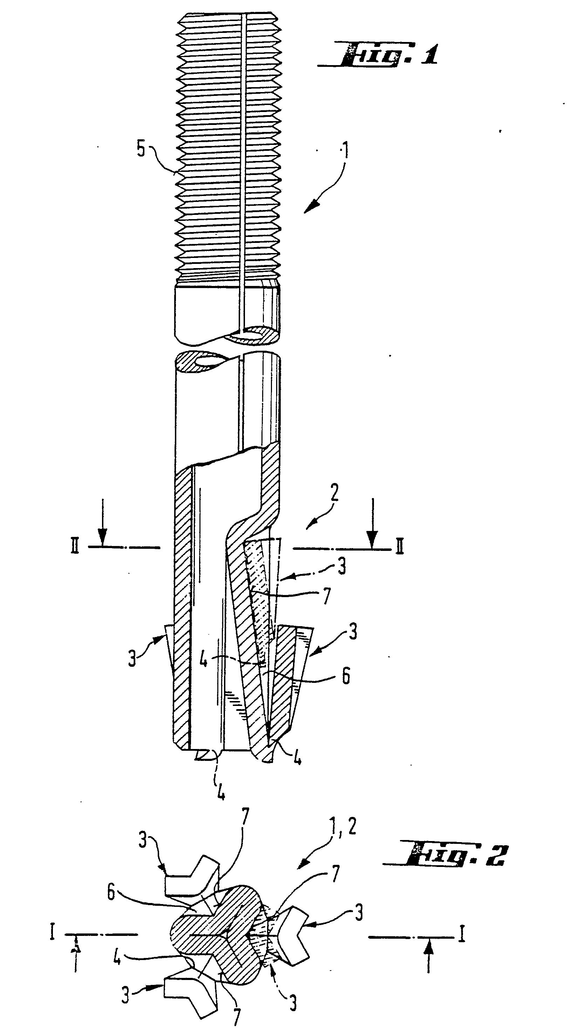

Der im wesentlichen hülsenförmige Dübelkörper 2 weist in dem der Setzrichtung entgegengesetzten Bereich Lastangriffsmittel 5 in Form eines Aussengewindes auf. Im setzrichtungsseitigen Bereich des Dübelkörpers 2 sind, wie die Fig. 2 verdeutlicht, über den Umfang gleichmässig verteilt drei keilförmige Ausnehmungen 6 vorgesehen. Deren Grund 7 läuft in Setzrichtung am Ende des Dübelkörpers 2 an dessen Umfangskontur aus.

Der Steg 4 ist im Vergleich zur Dicke des übrigen Dübelmaterials im Querschnitt geschwächt, um dessen Durchtrennung beim Auftreten einer entsprechenden Kraft zu Beginn des Einführvorganges zu erleichtern. Die an den Steg 4 anschliessenden Spreizelemente 3 sind im Querschnitt V-förmig ausgebildet und überragen die Umfangskontur des Dübelkörpers 2.

Zu Beginn des Einführvorganges des Spreizdübels 1 werden die Spreizelemente 3, da diese die Umfangskontur des Dübelkörpers 2 überragen, von der Mündung des der Aufnahme des Spreizdübels 1 dienenden Bohrloches in den Auslauf der Ausnehmungen 6 eingeschwenkt und bei weiterem Vortreiben des Dübelkörpers 2 reisst der Steg 4. Die nun freiliegenden Spreizelemente 3 tauchen bei weiterem Einführen des Dübelkörpers 2 alsdann tiefer in die Ausnehmungen 6 ein, wie dies in Fig. 1 strichpunktiert angedeutet ist. In dieser eingetauchten Position überragen die Schenkel des Spreizelementes 3 die Umfangskontur des Dübelkörpers 2 noch geringfügig. Bei anschliessendem Lastangriff am Dübelkörper 2 entgegen der Setzrichtung bleiben die Spreizelemente 3 gegenüber der Wandung des Bohrloches stehen und der im Querschnitt V-förmig geneigte Grund 7 der Ausnehmungen 6 bewirkt sohin ein radiales Auslenken der Spreizelemente 3 zur Wandung des Bohrloches hin, wodurch die Verankerung des Spreizdübels 1 zustande kommt.

## Patentansprüche

1. Spreizdübel zur Verankerung in Bohrlöchern von Bauteilen, mit einem Dübelkörper und einem oder mehreren keilförmigen Spreizelementen, wobei in dem der Setzrichtung entgegengesetzten Bereich des Dübelkörpers Lastangriffsmittel und im setzrichtungsseitigen Bereich des Dübelkörpers keilförmige Ausnehmungen für die Spreizelemente vorgesehen sind, wobei die Ausnehmungen einen in Setzrichtung an der Umfangskontur des Dübelkörpers auslaufenden Grund aufweisen, und die Spreizelemente mittels eines beim Einführen des Dübels in die Bohrlöcher durchtrennbaren Steges mit dem Dübelkörper verbunden sind, dadurch gekennzeichnet, dass die Spreizelemente (3) vom Steg (4) in die Umfangskontur des Dübelkörpers (2) überragender Position gehalten werden und der Steg (4) zwischen den setzrichtungsseitigen Enden von Dübelkörper (2) und Spreizelementen (3) angeordnet ist, und dass die radial grösste Tiefe des Ausnehmungen (6) geringer als das grösste Radialmass der Spreizelemente (3) ist.

2. Spreizdübel nach Anspruch 1, dadurch gekennzeichnet, dass der an der Umfangskontur des Dübelkörpers (2) auslaufende Grund (7) der Ausnehmungen (6) sich bis zum setzrichtungsseitigen Ende des Dübelkörpers (2) erstreckt.

3. Spreizdübel nach Anspruch 1 oder 2, dadurch gekennzeichnet, dass der Steg (4) als Biegezone ausgebildet ist.

4. Spreizdübel nach einem der Ansprüche 1 bis 3, dadurch gekennzeichnet, dass über den Umfang des Dübelkörpers (2) gleichmässig verteilt drei Ausnehmungen (6) und Spreizelemente (3) vorgesehen sind.

## Claims

1. Expanding dowel for anchorage in drill-holes of structural parts, comprising a dowel body and one or more wedge-shaped expansion elements, in which respect load application means are provided in that region of the dowel body which is opposed to the setting direction and wedge-shaped recesses for the expansion elements are provided in that region of the dowel body which is at the setting direction end, these recesses having a bottom which culminates in the setting direction at the circumferential contour of the dowel body, and the expansion elements being connected to the dowel body by means of a web which can be severed through upon the introduction of the dowel into the drill-holes, characterised in that the expansion elements (3) are held by the web (4) in a position projecting beyond the circumferential contour of the dowel body (2) and the web (4) is arranged between those ends of dowel body (2) and expansion elements (3) which are at the setting direction end, and in that the radially greatest depth of the recesses (6) is less than the greatest radial dimension of the expansion elements (3).

2. Expanding dowel according to claim 1, characterised in that the bottom (7) of the recesses (6) which culminates at the circumferential contour of the dowel body (2) extends as far as that end of the dowel body (2) which is at the setting direction end.

3. Expanding dowel according to claim 1 or 2, characterised in that the web (4) is designed as a bending zone.

4. Expanding dowel according to one of claims 1 to 3, characterised in that there are three recesses (6) and expansion elements (3) distributed uniformly over the circumference of the dowel body (2).

**Revendications**

1. Cheville expansible pour l'ancrage d'éléments de construction dans des perçages, avec un corps de cheville et un ou plusieurs éléments d'écartement en forme de coin, des organes d'application de la charge étant prévus dans la région du corps de cheville opposée à la direction d'enfoncement et des évidements en forme de coin étant prévus pour des éléments d'écartement dans la région du corps de cheville située du côté enfoncement, les évidements présentant un fond qui, dans la direction d'enfoncement, se termine sur le contour périphérique du corps de cheville et les éléments d'écartement étant reliés au corps de cheville au moyen d'une nervure qui peut être sectionnée lors de l'introduction de la cheville dans les perçages, caractérisée en ce que les éléments d'écartement (3) sont maintenus par la nervure (4) dans une position de saillie par rapport au contour périphérique du corps de cheville (2), que la nervure (4) est disposée entre les extrémités du corps de cheville (2) et des éléments d'écartement (3), et que la profondeur radiale maximale des évidements (6) est inférieure à la côte radiale maximale des éléments d'écartement (3).

2. Cheville expansible selon la revendication 1, caractérisée en ce que le fond (7) des évidements (6) qui se termine sur le contour périphérique du corps de cheville (2) s'étend jusqu'à l'extrémité du corps de cheville (2) dans la direction d'enfoncement.

3. Cheville expansible selon l'une des revendications 1 ou 2, caractérisée en ce que la nervure (4) est conformée en zone de flexion.

4. Cheville expansible selon l'une quelconque des revendications 1 à 3, caractérisée en ce qu'elle comprend trois évidements (6) et éléments d'écartement (3) répartis régulièrement sur la périphérie du corps de cheville (2).

*Fig. 1*

*Fig. 2*